# FASCICULE DE BREVET EUROPEEN

(11) **EP 2 663 747 B1**
(45) Date de publication et mention de la délivrance du brevet: **27.05.2015**
(21) Numéro de dépôt: 11805100.2
(22) Date de dépôt: 06.12.2011
(51) Int. Cl.: F01N 3/035, F01N 13/02

(54) **LIGNE D'ECHAPPEMENT POUR UN MOTEUR A COMBUSTION INTERNE**
ABGASLEITUNG EINES VERBRENNUNGSMOTORS
INTERNAL COMBUSTION ENGINE EXHAUST LINE

(30) Priorité: 11.01.2011 FR 1150212
(43) Date de publication de la demande: 20.11.2013
(73) Titulaire: Peugeot Citroën Automobiles SA, 78140 Vélizy Villacoublay (FR)
(72) Inventeur: CREHAN, Gabriel, F-92420 Vaucresson (FR); CHARIAL, Christophe, F-78000 Versailles (FR)
(74) Mandataire: Renous Chan, Véronique
(86) Numéro de dépôt international: PCT/FR2011/052876
(87) Numéro de publication internationale: WO 2012/095572

(56) Documents cités:
- EP-A1- 1 304 152
- EP-A1- 1 961 933
- WO-A1-2005/014146
- US-A1- 2006 196 167
- US-A1- 2007 240 406

## Description

L'invention concerne une ligne d'échappement pour un moteur à combustion interne. L'invention concerne également un ensemble de motorisation comportant cette ligne d'échappement. L'invention concerne enfin un véhicule équipé de cet ensemble de motorisation.

Les gaz d'échappement émis par un moteur à combustion interne contiennent des éléments polluants dont il est souhaitable de réduire le rejet dans l'atmosphère. Par « éléments polluants » on désigne plus particulièrement des oxydes d'azote NOₓ (N₂O, NO et NO₂), du monoxyde de carbone (CO), des hydrocarbures imbrûlés (HC), et des particules de suie. Afin de limiter les émissions d'éléments polluants, il est connu de réaliser un post-traitement des gaz traversant une ligne d'échappement d'un moteur à combustion interne. Typiquement, la ligne d'échappement d'un moteur à combustion interne comporte:
- une tubulure recevant les gaz d'échappement du moteur,
- un filtre à particules permettant de retenir et de brûler les particules de suies contenues dans les gaz,
- un catalyseur d'oxydation pour transformer les monoxydes de carbones (CO) et les hydrocarbures (HC) en dioxydes de carbone (CO₂) et en eau (H₂O), et
- un catalyseur de réduction pour transformer les oxydes d'azote (NOₓ) en azote (N₂) et en eau (H₂O).

Dans le but de minimiser l'encombrement de la ligne d'échappement, il a été proposé par le déposant d'intégrer le catalyseur d'oxydation et le catalyseur de réduction à l'intérieur du filtre à particules pour former un filtre à particules dit « bi-catalysé ».

Un filtre à particules bi-catalysé comporte généralement une structure en nid d'abeille. Le filtre comprend une face d'admission permettant l'admission des gaz d'échappement et une face d'évacuation permettant l'évacuation des gaz d'échappement hors du filtre. Le filtre comporte entre les faces d'admission et d'évacuation un ensemble de canaux ou conduits adjacents d'axes parallèles entre eux séparés par des parois poreuses de filtration. Les conduits sont obturés à l'une ou l'autre de leurs extrémités pour délimiter des conduits d'admission débouchant seulement sur la face d'admission et des conduits d'évacuation débouchant seulement sur la face d'évacuation. Les conduits sont alternativement obturés dans un ordre tel que les gaz d'échappement, au cours de la traversée du filtre, sont contraints de traverser les parois latérales des conduits d'entrée pour rejoindre les conduits de sortie. De cette manière, les particules de suie se déposent et s'accumulent sur les parois poreuses du filtre. Ces parois internes du filtre à particules sont imprégnées de revêtements catalytiques pour former le catalyseur de réduction et le catalyseur d'oxydation.

Typiquement, le filtre à particules est réalisé en carbure de silicium.

Un premier inconvénient d'un tel type de filtre à particules bi-catalysé est que pour garantir une dépollution réglementaire des gaz d'échappement, il est nécessaire que la quantité de revêtement catalytique imprégné sur les parois soit supérieure à un seuil minimum.

Si la quantité de revêtement catalytique imprégné sur les parois est trop importante, les pores du filtre s'obstruent. Dans ce cas, lors du fonctionnement du moteur, les gaz d'échappement traversent plus difficilement ce filtre. En conséquence, la pression des gaz d'échappement dans la tubulure, en entrée du filtre à particules, augmente. Indirectement, une obstruction des pores conduit à une augmentation de la consommation de carburant du moteur.

Une solution connue est d'augmenter le volume du filtre à particules de manière à pouvoir déposer davantage de revêtement catalytique sans obstruer les pores du filtre. Toutefois, cette solution est à éviter car elle augmente l'encombrement de la ligne d'échappement et les pertes de charge dans la tubulure.

Un second inconvénient est que pour permettre la réduction des oxydes d'azotes (NOₓ) dans le filtre à particules, un agent réducteur, typiquement de l'ammoniaque, est injecté dans la tubulure en amont du filtre. Lorsque l'agent de réduction traverse le filtre, l'agent est en partie transformé lors de la réduction des oxydes d'azote (NOₓ), et en partie piégé dans les parois poreuses du filtre à particules. L'oxydation des monoxydes de carbone (CO) et des hydrocarbures (HC) est lente. Aussi, celle-ci nécessite une quantité de revêtement catalytique formant le catalyseur d'oxydation importante. Si le revêtement catalytique formant le catalyseur d'oxydation est présent en trop grande quantité dans le filtre à particules à proximité de l'agent de réduction piégé (NH₃), cet agent de réduction(NH₃) est oxydé et forme alors des oxydes d'azote (NOₓ) toxiques. Ces émissions doivent être limitées.

Enfin, un troisième inconvénient est que les filtres bi-catalysés connus du déposant ne sont pas aptes à réduire les oxydes de diazote (NO₂) à basse température. En effet, il faut un certain temps avant que le filtre à particules atteigne une température de seuil permettant cette réduction. Ainsi, lors de la mise en marche du moteur à combustion interne, tant que le filtre à particules bi-catalysé n'a pas atteint la température de seuil, une importante quantité d'oxydes de diazote (NO₂) n'est pas transformée et est ainsi rejeté par la ligne d'échappement dans l'atmosphère. Les documents US 2007/0240406 et EP 1961933 divulguent de tels filtres catalysés.

L'invention vise à résoudre un ou plusieurs de ces inconvénients.

L'invention concerne une ligne d'échappement d'un moteur à combustion interne , cette ligne d'échappement comportant:
- une tubulure recevant des gaz d'échappement, et
- un filtre à particules logé à l'intérieur de cette tubulure imprégné:
   - d'un premier revêtement catalytique formant un catalyseur de réduction d'oxydes d'azotes (NOₓ), et
   - d'un second revêtement catalytique formant un premier catalyseur d'oxydation de monoxydes de carbone (CO) et d'hydrocarbures (HC),
- la ligne comporte un filtre additionnel, logé dans la tubulure en aval du filtre à particules, imprégné d'un revêtement catalytique formant un second catalyseur d'oxydation des monoxydes de carbone (CO) et d'hydrocarbures (HC), et
- le filtre additionnel comporte une structure interne telle que le filtre additionnel crée une perte de charge inférieure à la perte de charge créée par le même volume de filtre à particules imprégné par la même quantité de même revêtement catalytique.

Dans la ligne d'échappement présentée plus haut, le filtre additionnel est capable d'être imprégné d'une quantité revêtement catalytique par unité de volume supérieure au filtre à particules. Ainsi, pour augmenter la quantité de revêtement catalytique dans la ligne d'échappement, tout en ne bouchant pas les pores du filtre à particules, il est moins encombrant d'ajouter à la ligne d'échappement un filtre additionnel que d'allonger le filtre à particules.

Par ailleurs, le filtre additionnel crée une perte de charge inférieure à la perte de charge qui serait créée par le même volume de filtre à particules imprégné par la même quantité de revêtement catalytique que le filtre additionnel. Ainsi, la consommation du moteur n'est pas détériorée par rapport à un filtre à particules dont la longueur serait allongée.

Les modes de réalisation de cette ligne d'échappement peuvent comporter une ou plusieurs des caractéristiques suivantes:
▪ ligne d'échappement, dans laquelle:
   - le filtre à particules comporte:
      *des conduits d'admission débouchant uniquement sur une face d'admission des gaz d'échappement,
      *les conduits d'évacuation débouchant uniquement sur une face d'évacuation des gaz d'échappement, et
      *des parois poreuses pour connecter fluidiquement les conduits d'admission et les conduits d'évacuation,
   - le filtre additionnel comporte des conduits débouchant sur une face d'admission d'une part et sur une face d'évacuation d'autre part, le diamètre de ces conduits étant supérieur au diamètre des pores des parois poreuses du filtre à particules,
▪ le revêtement catalytique avec lequel est imprégné le filtre additionnel comporte des métaux alcalins ou des métaux alcalins terreux, de manière à ce que le filtre soit apte à réduire les dioxydes d'azote (NO₂) contenus dans les gaz d'échappement en monoxyde d'azote (NO),
▪ le filtre additionnel est inférieure à la capacité thermique du matériau dans lequel est réalisé le filtre à particules,
▪ le filtre additionnel est réalisé en cordiérite et/ou le filtre à particules est réalisé en carbure de silicium,
▪ ligne d'échappement, dans laquelle:
   - les conduits d'admissions du filtre à particules sont seulement imprégnés du premier revêtement catalytique,
   - des conduits d'évacuation du filtre à particules sont seulement imprégnés du second revêtement catalytique, et
   - le ratio entre le volume de premier revêtement catalytique et le volume de second revêtement catalytique dans le filtre à particules est supérieur ou égal à un, de préférence supérieur ou égal à deux.

Les modes de réalisation de cette ligne d'échappement présentent en outre les avantages suivants:
▪ lorsque le diamètre des conduits du filtre additionnel est supérieur au diamètre des pores du filtre à particules, il est possible d'imprégner le filtre additionnel d'une quantité de revêtement catalytique par unité de volume plus importante que le filtre à particules en créant une perte de charge plus faible,
▪ lorsque la capacité thermique massique du filtre additionnel est inférieure à la capacité thermique massique du filtre à particules, le filtre additionnel monte plus rapidement en température que le filtre à particules ce qui permet de débuter l'oxydation des monoxydes de carbone (CO) et des hydrocarbures (HC) à basse température lors de la mise en marche du moteur,
▪ lorsque le revêtement catalytique du filtre additionnel comprend des métaux alcalins ou des métaux alcalino-terreux, le filtre additionnel est apte à réduire les dioxydes d'azote (NO₂) contenus dans les gaz d'échappement en monoxyde d'azote (NO), et
▪ lorsque le ratio dans le filtre à particules entre le volume de premier revêtement catalytique et le volume de second revêtement catalytique est supérieur ou égal à 1 la quantité d'agent de réduction oxydée par le second revêtement est limitée.

L'invention concerne également un ensemble de motorisation, cet ensemble comportant:
- un moteur à combustion interne, et
- une ligne d'échappement telle que présentée plus haut.

L'invention concerne enfin un véhicule automobile équipé de cet ensemble de motorisation.

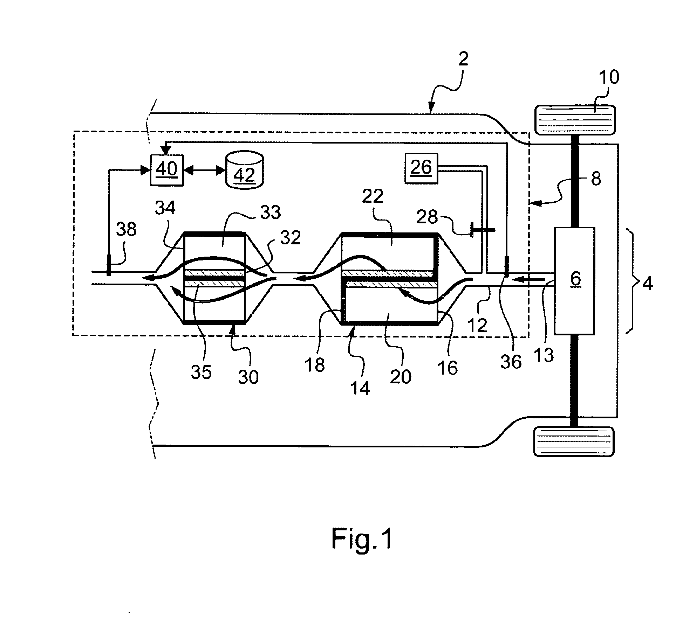

D'autres caractéristiques et avantages de l'invention ressortiront clairement de la description qui en est faite ci-après, à titre indicatif et nullement limitatif, en référence à la figure 1. La figure 1 est une illustration schématique partielle d'un véhicule équipé d'un ensemble de motorisation comportant une ligne d'échappement.

Dans la suite de cette description, les caractéristiques et fonctions bien connues de l'homme du métier ne sont pas décrites en détail.

La figure 1 représente un véhicule 2 tel qu'un véhicule automobile. Par exemple, le véhicule 2 est une voiture. Ce véhicule 2 est équipé d'un ensemble de motorisation 4. Cet ensemble 4 comporte un moteur 6 à combustion interne et une ligne d'échappement 8.

Le moteur 6 est propre à entraîner en rotation des roues motrices 10 du véhicule 2. Ici, le moteur 6 est un moteur diesel. Lors de son fonctionnement, le moteur 6 rejette des gaz d'échappement qui avant d'être expulsés à l'extérieur du véhicule 2 sont reçus par la ligne d'échappement 8 propre à traiter ces gaz.

La ligne d'échappement 8 comporte une tubulure 12 recevant les gaz d'échappement par un orifice 13 d'un collecteur d'échappement du moteur 6. Par exemple, la tubulure 12 est un tube cylindrique de section circulaire. Ici, la tubulure 12 est en acier.

La ligne d'échappement 8 comporte un filtre à particules 14 (également appelé FAP) apte à retenir les particules de suie contenues dans les gaz d'échappement et à brûler ces particules. De préférence, le filtre 14 est apte à retenir les particules de diamètre supérieur ou égal à 23nm. Le filtre 14 est disposé à l'intérieur de la tubulure 12.

Le filtre 14 est avantageusement réalisé en carbure de silicium. Le filtre 14 comporte ici une structure en nid d'abeille. Dans cet exemple, la structure interne du filtre 14 est connue en soi. Ici, celle-ci a déjà été présentée en introduction, aussi elle n'est pas décrite en détail. Par la suite on désigne par les références 16 et 18, respectivement, la face d'admission et la face d'évacuation de ce filtre 14.

Le filtre 14 comporte des conduits d'admission et d'évacuation. Afin de simplifier la figure 1, seul un conduit d'admission 20 débouchant sur la face d'admission 16 et un conduit d'évacuation 22 débouchant sur la face d'évacuation 18 sont représentés. Dans l'exemple, les conduits 20 et 22 sont collés les uns aux autres par l'intermédiaire d'un ciment. Typiquement, ce ciment peut comprendre une ou plusieurs des espèces chimiques suivantes: la cordiérite, SiC, B₄C, Si₃N₄, BN, AIN, ZrO₂, mullite, AL titanate, ZrB₂, et/ou Sialon (alliage de silicium, aluminium, oxygène, nitride).

Dans l'exemple, la longueur du filtre 14 est comprise en 5cm et 75cm. De préférence la longueur est comprise entre 18cm et 25cm.

Le filtre 14 est un filtre bi-catalysé. A cet effet, les parois poreuses des conduits sont imprégnées de deux revêtements catalytiques.

Les parois poreuses des conduits d'admission 20 sont ici seulement imprégnées d'un revêtement catalytique R_{cat1}. Le revêtement R_{cat1} forme un catalyseur de réduction sélectif (également appelé SCR). Ce catalyseur de réduction sélectif est apte à transformer les oxydes d'azotes (NOₓ) contenus dans les gaz d'échappement traversant le filtre 14 en azotes (N₂) et en eau (H₂O). Le revêtement catalytique R_{cat1} est connu en soi. Dans l'exemple, le revêtement R_{cat1} comprend une ou plusieurs des espèces chimiques suivantes: Al₂O₃, TiO₂, ZrO₂, CeO₂, Y₂O₃, PrO₂, SiO₂.

Les parois poreuses des conduits d'évacuation 22 sont ici seulement imprégnées d'un revêtement catalytique R_{cat2}. Le revêtement R_{cat2} forme un catalyseur d'oxydation diesel (également appelé DOC). Ce catalyseur d'oxydation diesel est apte à transformer les monoxydes de carbone (CO) et les hydrocarbures (HC) contenus dans les gaz d'échappement traversant le filtre 14 en dioxyde de carbone (CO₂) et en eau (H₂O). Le revêtement catalytique R_{cat2} est connu en soi. Par exemple, le revêtement R_{cat2} comprend une ou plusieurs des espèces chimiques suivantes: Al₂O₃, TiO₂, ZrO₂, CeO₂, Y₂O₃.

Les revêtements R_{cat1} et R_{cat2} comprennent par ailleurs un catalyseur. Dans l'exemple, le catalyseur est un matériau ou un alliage de matériaux appartenant au groupe platine (également appelé « Metal Group Platine (MGP)). Par « matériaux du groupe platine » on désigne ici le rhodium (Rh), le ruthénium (Ru), l'iridium (Ir), le rhénium (Re), l'osmium (Os), la platine (Pt) et le palladium (Pd). Ici, le catalyseur est un alliage de platine (Pt) et de palladium (Pd). Toujours dans cet exemple, le ratio entre la masse de platine et la masse de palladium contenu dans le revêtement R_{cat2} est comprise entre 1,5 et 2,5. A titre d'exemple, ce ratio est ici égal à 2.

De préférence, la masse de matériaux appartenant au groupe platine est supérieure dans le revêtement catalytique R_{cat2} que dans le revêtement catalytique R_{cat1}.

Avantageusement, la quantité totale de revêtements catalytiques imprégnés dans le filtre 14 est supérieure ou égale à 50g par litre de filtre, et de préférence, la quantité totale de revêtements catalytiques imprégnés est supérieure à 100g par litre de filtre. Généralement, la quantité de revêtement catalytique dans le filtre 14 est inférieure à 200g par litre de filtre.

Toujours de manière avantageuse, le ratio entre le volume de revêtement R_{cat1} et le volume de revêtement catalytique R_{cat2} dans le filtre à particules 14 est supérieur ou égal à deux et de préférence strictement supérieur à un. Ici; le ratio est supérieur ou égal à deux. Dans cet exemple, le revêtement R_{cat1} et R_{cat2} représentent respectivement 70% et 30% du volume total de revêtement catalytique imprégné dans le filtre 14.

La ligne d'échappement 8 comporte par ailleurs un réservoir 26. Le réservoir 26 contient un agent de réduction pour réduire les oxydes d'azotes (NOₓ) contenus dans les gaz d'échappement en azote (N₂) et en eau (H₂O). Typiquement, cet agent de réduction est de l'urée. Sous l'effet de la chaleur, l'urée se décompose en ammoniaque (NH₃) qui réagit avec les NOₓ au niveau des revêtements catalyseurs de réduction des NOₓ. L'agent de réduction est injecté dans la tubulure 12 en amont du filtre à particules 14 par l'intermédiaire d'un injecteur 28. Dans l'exemple, l'injecteur 28 injecte l'urée en aval d'un turbo-compresseur (non illustré). Toujours dans l'exemple, l'injecteur 28 comprend un capteur de la température des gaz d'échappement en amont du filtre à particules 14.

Dans cette description, les termes « aval » et « amont » sont définis par rapport au sens de circulation des gaz d'échappement dans la tubulure 12. Le sens de circulation des gaz d'échappement dans la tubulure 12 est représenté par des flèches sur la figure 1.

La ligne d'échappement 8 comporte également un filtre additionnel 30. Le filtre 30 est apte à réaliser l'oxydation des monoxydes de carbone (CO) et des hydrocarbures (HC) résiduels. Par «monoxydes de carbone (CO) et hydrocarbures (HC) résiduels » on désigne les monoxydes de carbone (CO) et des hydrocarbures (HC) non transformés en eau (H₂O) et en dioxydes de carbones (CO₂) par le filtre 14.

Le filtre 30 comprend des conduits 33 traversant le filtre 30 de part en part. Les conduits 33 débouchent sur une face d'admission 32 d'une part et sur une face d'évacuation 34 d'autre part. Afin de simplifier la figure 1, seul deux conduits 33 sont représentés. Les conduits 33 sont séparés par des parois internes 35. Ici, ces parois 35 sont moins poreuses que les parois interne du filtre 14.

Les parois internes 35 du filtre 30 séparant les conduits 33 entre eux sont imprégnées d'un revêtement catalytique R_{cat3} formant un catalyseur d'oxydation. Dans l'exemple les revêtements R_{cat2} et R_{cat3} sont de même composition chimique à l'exception du fait que le revêtement R_{cat3} comprend des métaux alcalins et/ou des métaux alcalino-terreux de manière à pouvoir réduire les dioxydes d'azote (NO₂) non réduit par le filtre à particules 14 à basse température en monoxyde d'azote (NO).

Par ailleurs, toujours dans l'exemple, dans le revêtement R_{cat3}, le ratio entre la masse de platine et la masse de palladium est avantageusement compris entre 0,2 et 1. Ici, ce ratio est égal à 0,5.

Le filtre 30 est logé dans la tubulure 12 en aval du filtre à particules 14. La distance séparant les filtres 14 et 30 est ici inférieure à 20 millimètres, de préférence inférieure à 10 mm.

Dans la suite de cette description, on désigne par « capacité thermique massique d'un matériau » l'énergie qu'il faut apporter à une masse de 1 kg de ce matériau pour augmenter sa température de un Kelvin. La capacité thermique est exprimée en Joule.Kelvin⁻¹.Kg⁻¹. La capacité thermique massique d'un matériau définit la capacité de ce matériau à absorber de la chaleur et à restituer cette chaleur.

Avantageusement, la capacité thermique du matériau dans lequel est réalisé le filtre 30 est inférieure à la capacité thermique du matériau dans lequel est réalisé le filtre 14. Dans ces conditions, lors du fonctionnement du moteur 6, la température à l'intérieur du filtre 30 atteint plus rapidement la température de « light-off » que le filtre 14. Par température de « light-off », on désigne ici la température à partir de laquelle 50% des monoxydes de carbones (CO) et des hydrocarbures (HC) contenus dans les gaz d'échappement sont oxydés par le revêtement catalyseur d'oxydation. Dans ces conditions, l'oxydation des monoxydes de carbones (CO) et des hydrocarbures (HC) est mise en oeuvre plus rapidement dans le filtre 30 que dans le filtre 14 ce qui permet de dépolluer les gaz d'échappement plus tôt lors de la mise en marche du moteur 6.

Par ailleurs, de manière à permettre au filtre 30 de monter en température rapidement, la longueur du filtre 30 est avantageusement comprise entre 2cm et 10cm, et de préférence comprise entre 5cm et 10cm.

Enfin, la structure interne filtre 30 est choisie pour que, à volume égal avec le filtre 14, le filtre 30 est apte à être imprégné d'une quantité de revêtement R_{cat3} par unité de volume supérieure au filtre 14, tout en créant une perte de charge inférieure. Ainsi, la structure interne du filtre 30 est telle que la perte de charge qu'il crée est inférieure à la perte de charge qui serait créée par le filtre à particules 14 de même volume et imprégné de la même quantité de même revêtement. A cet effet, dans l'exemple le diamètre des conduits 33 est supérieur au diamètre des pores des parois internes du filtre à particules 14.

En effet, les conduits 33 traversant le filtre de part en part et la paroi 35 étant peu poreuse, la perte de charge engendrée par le filtre 30 est fonction de la longueur du filtre 30, de la quantité de revêtement imprégné sur les parois 35 et du diamètre des conduits 33. A l'inverse, les conduits 20 et 22 étant obturés au niveau d'une face du filtre 14, la perte de charge engendrée par le filtre 14 est fonction de la longueur du filtre 14, de la quantité de revêtement imprégnée et de la taille des pores des parois poreuses.

Dans l'exemple, le filtre 30 est un monolithe de cordiérite.

La ligne d'échappement 8 comporte par ailleurs des capteurs 36 et 38 de la quantité de NOₓ contenus dans les gaz d'échappement, respectivement, en amont du filtre 14 et en aval du filtre 30.

La ligne d'échappement 8 comporte enfin une unité de calcul 40 pour:
- acquérir des mesures issues des capteurs 36 et 38, et
- commander la quantité d'urée injectée par l'injecteur 28 dans la tubulure 12 en fonction des mesures acquises.

Par exemple, l'unité 40 est réalisée à partir d'un calculateur électronique programmable apte à exécuter des instructions enregistrées sur un support d'enregistrement d'informations 42. A cet effet, l'unité 40 est raccordée à un support d'enregistrement d'informations contenant des instructions pour l'exécution d'un procédé de commande des capteurs 36, 38 et de l'injecteur 28.

De nombreux autres modes de réalisation sont possibles.

D'autres matériaux peuvent être utilisés pour réaliser les filtres 14 et 30. Par exemple, les filtres 14 et 30 peuvent comprendre un ou plusieurs des matériaux suivants: Cordiérite, SiC, B₄C, Si₃N₄, BN, AIN, Al₂O₃, ZrO₂, mullite, Al titanate, ZrB₂, and Sialon.

Dans les revêtements R_{cat2} et R_{cat3} le catalyseur ne comprend pas nécessairement un matériau du groupe platine. D'autres catalyseurs peuvent être utilisées en complément ou en remplacement. Par exemple, le catalyseur peut être un des métaux précieux suivant: l'or (Au), et/ou l'argent (Ar). Le catalyseur peut également comprendre des métaux lanthanides, des métaux actinides, des métaux de transition, des perovskites, et/ou des zéolites. Un métal de transition peut être du scandium (Sc), du titane (Ti), du vanadium (V), du chrome (Cr), du manganèse (Mn), du fer (Fe), du cobalt (Co), du nickel (Ni), du cuivre (Cu) ou du zinc (Zn).

Dans le revêtement R_{cat1}, le catalyseur ne comprend pas nécessairement un matériau du groupe platine. D'autres catalyseurs peuvent être utilisées en complément ou en remplacement. Par exemple, le catalyseur peut être un des métaux précieux suivant: l'or (Au), et/ou l'argent (Ar). Le catalyseur peut également comprendre des métaux de transitions, des métaux alcalins, des métaux alcalino-terreux, des métaux lanthanides, des pièges à hydrocarbons tels que les zéolithes ou de l'argile, des métaux actinides, et/ou des perovskites.

L'injecteur peut être disposé en amont du turbo-compresseur.

D'autres agents réducteurs que l'urée peuvent être utilisés.

Les revêtements catalytiques R_{cat2} et R_{cat3} peuvent être de même composition chimique.

Les capteurs 36, 38 peuvent être omis. Dans ce cas, l'unité 40 peut commander l'injecteur 28 à partir de formules ou de tables pré-enregistrées.

Le moteur n'est pas nécessairement un moteur de type diesel. Le moteur peut être un moteur de type essence. Dans ce cas, le filtre à particules peut être imprégné de manière à mettre en oeuvre les fonctions d'un catalyseur trois voies.

## Revendications

1. Ligne d'échappement (8) pour un moteur à combustion interne (6), cette ligne d'échappement comportant:
- une tubulure (12) recevant des gaz d'échappement, et
- un filtre à particules (14) logé à l'intérieur de cette tubulure (12) imprégné:
• d'un premier revêtement catalytique formant un catalyseur de réduction d'oxydes d'azotes (NOₓ), et
• d'un second revêtement catalytique formant un premier catalyseur d'oxydation de monoxydes de carbone (CO) et d'hydrocarbures (HC),
**caractérisé en ce que**:
- la ligne (8) comporte un filtre additionnel (30), logé dans la tubulure (12) en aval du filtre à particules (14), imprégné d'un revêtement catalytique formant un second catalyseur d'oxydation des monoxydes de carbone (CO) et d'hydrocarbures (HC), et
- le filtre additionnel (30) comporte une structure interne telle que le filtre additionnel crée une perte de charge inférieure à la perte de charge créée par le même volume de filtre à particules (14) imprégné par la même quantité de même revêtement catalytique.

2. Ligne d'échappement (8) selon la revendication 1, dans laquelle:
- le filtre à particules (14) comportent:
• des conduits d'admission (20) débouchant uniquement sur une face d'admission (16) des gaz d'échappement,
• des conduits d'évacuation (22) débouchant uniquement sur une face d'évacuation (18) des gaz d'échappement, et
• des parois poreuses pour connecter fluidiquement les conduits d'admission (20) et les conduits d'évacuation,
- le filtre additionnel (30) comporte des conduits (33) débouchant sur une face d'admission (32) d'une part et sur une face d'évacuation (34) d'autre part, le diamètre de ces conduits (33) étant supérieur au diamètre des pores des parois poreuses du filtre à particules (14).

3. Ligne d'échappement (8) selon l'une quelconque des revendications précédentes, dans laquelle le revêtement catalytique avec lequel est imprégné le filtre additionnel comporte des métaux alcalins ou des métaux alcalins terreux, de manière à ce que le filtre (30) soit apte à réduire les dioxydes d'azote (NO₂) contenus dans les gaz d'échappement en monoxyde d'azote (NO).

4. Ligne d'échappement (8) selon l'une quelconque des revendications précédentes, dans laquelle la capacité thermique du matériau dans lequel est réalisé le filtre additionnel (30) est inférieure à la capacité thermique du matériau dans lequel est réalisé le filtre à particules (14).

5. Ligne d'échappement (8) selon l'une quelconque des revendications précédentes, dans laquelle le filtre additionnel (30) est réalisé en cordiérite et/ou le filtre à particules (14) est réalisé en carbure de silicium.

6. Ligne d'échappement (8) selon l'une quelconque des revendications précédentes, dans laquelle:
- les conduits d'admissions (20) du filtre à particules (14) sont seulement imprégnés du premier revêtement catalytique,
- des conduits d'évacuation (22) du filtre à particules (14) sont seulement imprégnés du second revêtement catalytique, et
- le ratio entre le volume de premier revêtement catalytique et le volume de second revêtement catalytique dans le filtre à particules (14) est supérieur ou égal à un, de préférence supérieur ou égal à deux.

7. Ensemble de motorisation (4), cet ensemble comportant:
- un moteur à combustion interne (6), et
- une ligne d'échappement (8) conforme à l'une quelconque des revendications précédentes.

8. Ensemble (4) selon la revendication 7, dans lequel le moteur (6) est un moteur de type diesel.

9. Véhicule (2), **caractérisé en ce qu'**il comporte un ensemble de motorisation (4) conforme à la revendication 7 à 8.

## Patentansprüche

1. Abgasleitung (8) für einen Verbrennungsmotor (6), wobei diese Abgasleitung Folgendes umfasst:
- einen Rohransatz (12), der Abgase empfängt, und
- ein Partikelfilter (14), das im Inneren dieses Rohransatzes (12) untergebracht ist, imprägniert:
• mit einer ersten katalytischen Beschichtung, die einen Stickstoffoxid (NOₓ)-Reduktionskatalysator bildet, und
• mit einer zweiten katalytische Beschichtung, die einen ersten Kohlenstoffmonoxid (CO)- und Kohlenwasserstoff (HC)-Oxidationskatalysator bildet,
**dadurch gekennzeichnet, dass**
- die Leitung (8) ein zusätzliches Filter (30) umfasst, das in dem Rohrstutzen (12) stromabwärts des Partikelfilters (14) untergebracht ist, imprägniert mit einer katalytischen Beschichtung, die einen zweiten Kohlenstoffmonoxid (CO)- und Kohlenwasserstoff (HC)-Oxidationskatalysator bildet, und
- das zusätzliche Filter (30) eine innere Struktur derart aufweist, dass das zusätzliche Filter einen Lastverlust schafft, der niedriger ist als der Lastverlust, der von demselben Volumen eines Partikelfilters (14), das mit derselben Menge derselben katalytischen Beschichtung imprägniert ist, geschaffen wird.

2. Abgasleitung (8) nach Anspruch 1, bei der:
- die Partikelfilter (14) Folgendes umfassen:
• Einlassleitungen (20) die nur auf einer Einlassfläche (16) der Abgase münden,
• Auslassleitungen (22), die nur auf einer Auslassfläche (18) der Abgase münden, und
• porige Wände zum fluidtechnischen Verbinden der Einlassleitungen (20) und der Auslassleitungen,
- wobei das zusätzliche Filter (30) Leitungen (33) umfasst, die auf einer Einlassfläche (32) einerseits und auf einer Auslassfläche (34) andererseits münden, wobei der Durchmesser dieser Leitungen (33) größer ist als der Durchmesser der Poren der porigen Wände des Partikelfilters (14).

3. Abgasleitung (8) nach einem der vorhergehenden Ansprüche, bei der die katalytische Beschichtung, mit der das zusätzliche Filter imprägniert ist, alkalische Metalle und Erdalkalimetalle derart umfasst, das das Filter (30) angepasst ist, um die Stickstoffdioxide (NO₂), die in den Abgasen enthalten sind, in Stickstoffmonoxid (NO) zu reduzieren.

4. Abgasleitung (8) nach einem der vorhergehenden Ansprüche, bei der die Wärmekapazität des Werkstoffs, aus dem das zusätzliche Filter (30) hergestellt ist, niedriger ist als die Wärmekapazität des Werkstoffs, aus dem das Partikelfilter (14) hergestellt ist.

5. Abgasleitung (8) nach einem der vorhergehenden Ansprüche, bei der das zusätzliche Filter (30) aus Cordierit hergestellt ist und/oder das Partikelfilter (14) aus Siliziumkarbid hergestellt ist.

6. Abgasleitung (8) nach einem der vorhergehenden Ansprüche, bei der:
- die Einlassleitungen (20) des Partikelfilters (14) nur mit der ersten katalytischen Beschichtung imprägniert sind,
- Auslassleitungen (22) des Partikelfilters (14) nur mit der zweiten katalytischen Beschichtung imprägniert sind, und
- das Verhältnis zwischen dem Volumen der ersten katalytischen Beschichtung und der zweiten katalytischen Beschichtung in dem Partikelfilter (14) größer oder gleich ist als eins, vorzugsweise größer oder gleich zwei.

7. Antriebseinheit (4), wobei diese Einheit Folgendes umfasst:
- einen Verbrennungsmotor (6) und
- eine Abgasleitung (8) nach einem der vorhergehenden Ansprüche.

8. Einheit (4) nach Anspruch 7, bei der der Motor (6) ein Motor des Dieseltyps ist.

9. Fahrzeug (2), **dadurch gekennzeichnet, dass** es eine Antriebseinheit (4) nach den Ansprüchen 7 bis 8 umfasst.

## Claims

1. An exhaust line (8) for an internal combustion engine (6), this exhaust line comprising:
- a pipe (12) receiving exhaust gases, and
- a particulate filter (14) housed in the interior of this pipe (12), impregnated:
▪ with a first catalytic coating forming a reduction catalyst for nitrogen oxides (NOₓ), and
▪ with a second catalytic coating forming a first oxidation catalyst for carbon monoxides (CO) and hydrocarbons (HC), **characterized in that**
- the line (8) comprises an additional filter (30), housed in the pipe (12) downstream of the particulate filter (14) and impregnated with a catalytic coating forming a second oxidation catalyst for carbon monoxides (CO) and hydrocarbons (HC), and
- the additional filter (30) comprises an internal structure such that the additional filter creates a pressure drop which is less than the pressure drop created by the same volume of particulate filter (14) impregnated with the same quantity of the same catalytic coating.

2. The exhaust line (8) according to Claim 1, in which:
- the particulate filter (14) comprises:
▪ inlet ducts (20) opening solely on an inlet face (16) of the exhaust gases,
▪ evacuation ducts (22) opening solely on an evacuation face (18) of the exhaust gases, and
▪ porous walls for fluidically connecting the inlet ducts (20) and the evacuation ducts,
- the additional filter (30) comprises ducts (33) opening on an inlet face (32) on the one hand and on an evacuation face (34) on the other hand, the diameter of these ducts (33) being greater than the diameter of the pores of the porous walls of the particulate filter (14).

3. The exhaust line (8) according to any one of the preceding claims, in which the catalytic coating with which the additional filter is impregnated comprises alkaline metals or alkaline earth metals, such that the filter (30) is able to reduce the nitrogen dioxides (NO₂) contained in the exhaust gases to nitrogen monoxide (NO).

4. The exhaust line (8) according to any one of the preceding claims, in which the thermal capacity of the material in which the additional filter (30) is realized is less than the thermal capacity of the material in which the particulate filter (14) is realized.

5. The exhaust line (8) according to any one of the preceding claims, in which the additional filter (30) is made from cordierite and/or the particulate filter (14) is made from silicon carbide.

6. The exhaust line (8) according to any one of the preceding claims, in which:
- the inlet ducts (20) of the particulate filter (14) are solely impregnated with the first catalytic coating,
- evacuation ducts (22) of the particulate filter (14) are solely impregnated with the second catalytic coating, and
- the ratio between the volume of first catalytic coating and the volume of second catalytic coating in the particulate filter (14) is greater than or equal to one, preferably greater than or equal to two.

7. A motorisation assembly (4), this assembly comprising:
- an internal combustion engine (6), and
- an exhaust line (8) according to any one of the preceding claims.

8. The assembly (4) according to Claim 7, in which the engine (6) is an engine of the diesel type.

9. A vehicle (2), **characterized in that** it comprises a motorisation assembly (4) according to Claim 7 to 8.
